# EUROPÄISCHE PATENTSCHRIFT

(11) **EP 3 829 905 B1**
(45) Veröffentlichungstag und Bekanntmachung des Hinweises auf die Patenterteilung: **24.11.2021**
(21) Anmeldenummer: 19749674.8
(22) Anmeldetag: 29.07.2019
(51) Int. Cl.: B60G 7/02, F16F 1/38

(54) **LAGERVORRICHTUNG ZUR LAGERUNG EINES ACHSLENKERS**
BEARING DEVICE FOR MOUNTING AN AXLE GUIDE
DISPOSITIF DE PALIER POUR SUPPORTER UN GUIDE D'ESSIEU

(30) Priorität: 30.07.2018 DE 102018118340
(43) Veröffentlichungstag der Anmeldung: 09.06.2021
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2019/070366
(87) Internationale Veröffentlichungsnummer: WO 2020/025542

(56) Entgegenhaltungen:
- DE-A1-102007 016 226
- FR-A1- 3 044 599
- JP-A- S61 271 106
- US-A1- 2003 067 133
- US-B1- 6 430 774

## Beschreibung

Die Erfindung betrifft eine Lagervorrichtung zur Lagerung eines Achslenkers und eine Achsaufhängung.

Achsaufhängungen sind bereits im Stand der Technik bekannt, welche dazu dienen, einen Achslenker mittels einer Lagervorrichtung an einem Haltebock festzulegen. Dabei wird für jede Achslenkerbreite eine dazu passende Lagervorrichtung sowie ein dazu angepasster Haltebock hergestellt. Dies führt dazu, dass an einem Haltebock nur eine Art von Achslenker befestigt werden kann. Somit muss bei einer Veränderung der Achslenkerbreite sowohl die Lagervorrichtung als auch der Haltebock sowie die vorhandenen Montageanschlüsse verändert werden. Dies hat insbesondere den Nachteil, dass bei einem Lieferengpass oder bei einer nachträglichen Anpassung des Achslenkers sowohl der Haltebock als auch die Lagervorrichtung komplett ausgetauscht werden müssen.

Die DE 10 2007 016226 A1 offenbart ein Lager für eine Radaufhängung eines Kraftfahrzeugs mit einem Lagerkern und einen den Lagerkern um-gebenden Elastomer-Körper sowie zwei Axiallager mit inneren und äußeren Lagerelementen und zwischen den Lagerelementen angeordneten Elastomer-Körpern. Dabei sind die einzelnen Lagerbauteile fest vormontiert.

Die JP S61 271106 A offenbart eine Lagervorrichtung, bei der ein innerer Zylinder rotierbar an einer Drehachse, welche an einer Halterung befestigt ist, montiert ist. Zudem ist ein äußerer Zylinder auf dem inneren Zylinder montiert, wobei sich ein Gummielement zwischen den beiden Zylindern befindet und ein verschiebbarer Ring sowie ein ringförmiger Abstandhalter zwischen einer Seitenfläche des äußeren Zylinders und der Halterung platziert sind.

Die US 6 430774 B1 offenbart ein drehbares Lager für eine Aufhängung mit einem inneren und einem äußeren Metallteil, wobei ein Elastomer-Lager zwischen den Metallteilen angebracht ist. Das äußere Metallteil hat dabei ein Ende, welches teilweise durch einen nach innen gekrümmten Abschnitt geschlossen ist, und ein Ende welches für die Montage des Lagers offen ist. Nach der Montage wird das offene Ende durch Quetschen einer Abdeckung an einen Flansch, welcher am offenen Ende ausgebildet ist, geschlossen.

Die US 20037067133 A1 offenbart eine LKW-Achsanordnung mit einem Paar sich longitudinal erstreckender Schwingarme, welche drehbar um eine senkrechte Achse an einer Karosserie befestigt werden können.

Es ist somit Aufgabe der vorliegenden Erfindung, eine Lagervorrichtung und eine Achsaufhängung bereitzustellen, welche den Aufwand, einen Achslenker zu wechseln, deutlich reduzieren.

Gelöst wird diese Aufgabe mit einer Lagervorrichtung gemäß dem Anspruch 1 und mit einer Achsaufhängung gemäß dem Anspruch 11. Weitere Vorteile und Merkmale ergeben sich aus den Unteransprüchen, der Beschreibung und den Figuren. Erfindungsgemäß umfasst eine Lagervorrichtung zur Lagerung eines Achslenkers, insbesondere für Nutzfahrzeuge, ein erstes Verbindungsmittel, welches eine axiale Erstreckungsrichtung aufweist, wobei das erste Verbindungsmittel in der axialen Erstreckungsrichtung einen ersten axialen Mittelpunkt aufweist, wobei das erste Verbindungsmittel eine nach außen umfängliche Umlauffläche bildet, wobei an der Umlauffläche eine Dämpfungseinheit festgelegt ist, wobei die Dämpfungseinheit die Umlauffläche zumindest teilweise umfänglich umschließt, wobei die Dämpfungseinheit eine nach außen umfängliche Haltefläche aufweist, wobei ein zweites Verbindungsmittel an der Haltefläche festgelegt ist, wobei das zweite Verbindungsmittel sich entlang der axialen Erstreckungsrichtung erstreckt, wobei das zweite Verbindungsmittel eine Begrenzungsfläche aufweist, an welcher ein Achslenker festlegbar ist, wobei die Begrenzungsfläche in der axialen Erstreckungsrichtung einen zweiten axialen Mittelpunkt aufweist, wobei der erste und zweite axiale Mittelpunkt entlang eines Vektors der axialen Erstreckungsrichtung versetzt zueinander sind. Die erfindungsgemäße Lagervorrichtung dient in anderen Worten dazu, einen Achslenker mittels der Lagervorrichtung an einem Haltebock schwenkbar festzulegen. Bei dem ersten Verbindungsmittel handelt es sich bevorzugt um eine Art von Rohr oder rohrähnlichem Körper, wie einer Buchse. In anderen Worten kann das erste Befestigungsmittel eine zentrale Ausnehmung aufweisen, welche sich bevorzugt in die axiale Erstreckungsrichtung erstreckt. Das erste Verbindungsmittel weißt bevorzugt an seinen Außenseiten bzw. Stirnseiten zwei sich gegenüberliegende Ebenen auf, wobei die beiden Ebenen bevorzugt parallel oder näherungsweise parallel zu den Innenflächen eines Haltebock angeordnet sind. Senkrecht zu den beiden Ebenen ist vorzugweise eine axiale Erstreckungsrichtung vorgesehen, wobei die axiale Erstreckungsrichtung bevorzugt durch den radialen Mittelpunkt des ersten Verbindungsmittels führt. Vorteilhafterweise ist die axiale Erstreckungsrichtung dabei auch deckungsgleich zu der Rotationsachse, um welche der festzulegende Achslenker in einem eingebauten Zustand relativ zu dem Lagerbock rotieren kann. In anderen Worten kann dies bedeuten, dass die axiale Erstreckungsrichtung der Drehachse des Achslenkers relativ zum Lagerbock entspricht. Zudem handelt es sich bei der axialen Erstreckungsrichtung bevorzugt um eine Achse, welche vorzugsweise die Symmetrieachse des ersten Verbindungsmittels zwischen den beiden Ebenen ist. Zudem weist das erste Verbindungsmittel einen ersten axialen Mittelpunkt auf, welcher sich auf der Achse der axialen Erstreckungsrichtung befindet. Der erste axiale Mittelpunkt wird bevorzugt durch die maximale Erstreckungslänge des ersten Verbindungsmittels entlang der Achse der axialen Erstreckungsrichtung definiert, wobei mittig zwischen den beiden Endpunkten des ersten Verbindungsmittels der erste axiale Mittelpunkt liegt. Alternativ oder zusätzlich bevorzugt ist der erste axiale Mittelpunkt der Mittelpunkt der außen umfänglichen Umlauffläche des ersten Befestigungsmittels in Richtung der axialen Erstreckungsrichtung. Wie bereits erwähnt, weist das erste Verbindungsmittel des Weiteren eine nach außen umfängliche Umlauffläche auf, wobei das erste Verbindungsmittel bevorzugt aus einem Rohr gebildet ist, wobei die außenumfängliche Umlauffläche durch die Außenseite des Rohrs gebildet sein kann. An der Umlauffläche des ersten Verbindungsmittels ist eine Dämpfungseinheit festgelegt. Die Dämpfungseinheit ist bevorzugt aus einem rückstellfähigen Material, wie einem Gummi oder gummiähnlichem Material, hergestellt, insbesondere ein Elastomer oder Elastomerverbund, welches dazu ausgelegt ist, zu dämpfen. Dabei umschließt die Dämpfungseinheit zumindest teilweise die Umlauffläche, wobei "zumindest teilweise" bedeutet, dass die Dämpfungseinheit die Umlauffläche auch vollständig radial umschließen kann. Zudem weist die Dämpfungseinheit eine nach außen umfängliche Haltefläche auf, wobei die Haltefläche dazu ausgelegt ist, ein zweites Verbindungsmittel festzulegen. In einer bevorzugten Ausführungsform ist das erste Verbindungsmittel als eine Art Rohr ausgeführt, wobei an der Umlauffläche des Rohrs eine rohrförmige Dämpfungseinheit festgelegt ist, die das 0,8- bis 1,0-fache der Umlauffläche umschließt. Dies kann in anderen Worten bedeuten, dass 80% bis 100% der Umlauffläche von der Dämpfungseinheit umschlossen bzw. abgedeckt sind. Hierdurch kann eine besonders mechanisch stabile Verbindung zwischen dem ersten Verbindmittel und der Dämpfungseinheit erreicht werden. Dabei ist besonders vorteilhaft, dass eine Kraftübertragungsfläche zwischen der Dämpfungseinheit und dem ersten Verbindungsmittel vorhanden ist bzw. entsteht. Bevorzugt weist die Umlauffläche die gleiche Länge entlang der axialen Erstreckungsrichtung auf wie die Haltefläche. Dies ist vorteilhaft, da eine Fertigung der Dämpfungseinheit deutlich erleichtert wird, da keine aufwändig zu fertigenden Schrägen an der Dämpfungseinheit vorzusehen sind. Alternativ kann die Dämpfungseinheit auch Schrägen oder ähnliche Rundungen an den Außenkanten, insbesondere den in die axiale Erstreckungsrichtung begrenzenden Außenkanten, aufweisen, da in einer bevorzugten Ausführungsform die Haltefläche das 0,7 bis 1,0-fache der Umlauffläche aufweist, so dass die Haltefläche kleiner als die Umlauffläche ist. Dies hat den Vorteil, dass insbesondere eine Materialeinsparung stattfindet, insbesondere bei kleineren Achslenkern.

Zudem weist die Lagervorrichtung ein zweites Verbindungsmittel auf, welches bevorzugt an der Haltefläche festgelegt ist. Bei dem zweiten Verbindungsmittel handelt es sich bevorzugt um eine Art Rohr oder rohrähnlichen Körper, wie einer Buchse. Dabei umschließt das zweite Verbindungsmittel die Haltefläche. Bevorzugt kann das zweite Verbindungsmittel die Haltefläche in einem Verhältnis von 0,5 bis 1,0, bevorzugt 0,7 bis 1,0 der Haltefläche umschließen. Dies hat den Vorteil, dass das zweite Verbindungsmittel an kleineren Achslenkern ohne einen hohen konstruktiven Aufwand festgelegt werden kann. Das zweite Verbindungsmittel erstreckt sich bevorzugt entlang der axialen Erstreckungsrichtung. Dabei ist das zweite Verbindungsmittel in seiner Erstreckungslänge bevorzugt in einem Verhältnis von 0,5 bis 1,0 zum ersten Verbindungsmittel ausgelegt. Somit ist bevorzugt das zweite Verbindungsmittel kürzer in seiner axialen Erstreckungsrichtung als das erste Verbindungsmittel, was den Vorteil hat, dass ein Volumen entsteht, in welches das zweite Verbindungsmittel im Verhältnis zum ersten Verbindungsmittel verschoben werden kann und das zweite Verbindungsmittel nicht an einem anliegenden Bauteil, wie bspw. einem Haltebock, anstoßen kann. Des Weiteren ist bevorzugt, dass das zweite Verbindungsmittel eine Begrenzungsfläche aufweist, an welcher ein Achslenker festlegbar, insbesondere abstützend anlegbar, oder kontaktieren anlegbar ist. Die Begrenzungsfläche ist an der umfänglichen Außenfläche des zweiten Verbindungsmittels vorgesehen. Dabei erstreckt sich die Begrenzungsfläche in einer Erstreckungslänge entlang der axialen Erstreckungsrichtung bevorzugt in einem Verhältnis von 0,5 bis 1,0 der Erstreckungslänge des zweiten Verbindungsmittels. Dies ist besonders vorteilhaft, da mittels der Begrenzungsfläche eine Desachsierung, in andere Worten ein Versatz der Anordnung des Achslenkers stattfinden kann, welche an dem zweiten Verbindungsmittel festgelegt ist. Hierdurch kann zusätzlicher Bauraum geschaffen werden, sowie eine erhöhte Austauschbarkeit von Achslenkern an einem Typ von Haltebock erreicht werden. Bei einem Achslenker handelt es sich bevorzugt um einen Längslenker oder alternativ um einen Querlenker, welche bevorzugt für die Anwendung in einem Nutzfahrzeug ausgelegt ist. Die Begrenzungsfläche weist bevorzugt einen zweiten axialen Mittelpunkt auf, welcher auf der Achse der axialen Erstreckungsrichtung liegt. Dabei ist der zweite axiale Mittelpunkt bevorzugt mittig zwischen den Endpunkten der Begrenzungsfläche ausgeführt. Dabei ist zwischen dem ersten und dem zweiten axialen Mittelpunkt ein Vektor angeordnet, welcher den axialen Versatz zwischen dem ersten und dem zweiten axialen Mittelpunkt entlang der axialen Erstreckungsrichtung beschreibt. Dabei bringt der Vektor zum Ausdruck, in welche Richtung und mit welchem Abstand der erste von dem zweiten axialen Mittelpunkt beabstandet ist. In einer vorteilhaften Ausführungsform beschreibt der Vektor einen Versatz zwischen dem ersten und zweiten axialen Mittelpunkt zwischen 1 mm und 40 mm, besonders bevorzugt zwischen 10 mm und 25 mm.

Bevorzugt ist das erste Verbindungsmittel an einem Bolzen eines Haltebocks festgelegt bzw. angeordnet und weist an seiner Außenseite eine Umlauffläche auf, welche vollständig von der Dämpfungseinheit umschlossen wird. Die Dämpfungseinheit weist an ihrer Außenseite eine Haltefläche auf, welche vorzugsweise weniger als das 0,9-fache der Umlauffläche beträgt. An der Haltefläche ist ein Verbindungsmittel angeordnet, welches die Haltefläche vollständig umschließt und an seiner Außenseite eine Begrenzungsfläche aufweist, welche vorzugsweise weniger als das 0,8-fache der Haltefläche beträgt. Dabei weist die Begrenzungsfläche einen Achslenker auf, wobei der Achslenker die Begrenzungsfläche vollständig umschließt und somit der Mittelpunkt des Achslenkers als auch der Mittelpunkt der Begrenzungsfläche entlang der axialen Erstreckungsrichtung von dem axialen Mittelpunkt des ersten Verbindungsmittels beabstandet ist. Der Vorteil ist, dass eine gezielte Desachsierung mittels der Lagervorrichtung erreicht werden kann. Des Weiteren ist vorteilhaft, dass mittels der Lagervorrichtung eine Vielzahl an unterschiedlichen Achslenkern an einem Typ von Haltebock festgelegt werden kann, da durch das zweite Verbindungsmittel eine Vielzahl von unterschiedlichen Achslenkern festgelegt werden kann. Somit muss nicht mehr ein Haltebock ausgetauscht werden, wenn eine andere Art von Achslenkern verwendet werden soll und es müssen auch keine Aggregatsanschlüsse oder Bohrungen oder ähnliches versetzt werden. Ein besonderer Vorteil ist, dass kurzfristig an demselben Haltebock ein anderer Achslenker montiert werden kann als vorgesehen und somit eine Einsparung an Montageaufwand stattfindet. Zudem wird durch die Desachsierurng des Achslenkers zu dem Haltebock zusätzlicher Bauraum an der Radnabe und für an Radnaben angrenzende Teile geschaffen.

Erfindungsgemäß weist das zweite Verbindungsmittel einen Positionierungsbereich auf, welche dazu ausgelegt ist, eine Lagesicherung des Achslenkers zu vollziehen. Die Anlagefläche weist bevorzugt eine Normale auf, welche parallel zu der axialen Erstreckungsrichtung ist. Hierdurch kann insbesondere eine Querbelastung bei einem Anschlagen des Achslenkers an der Anschlagsfläche vermieden werden. Bei dem Positionierungsbereich handelt es sich vorzugsweise um ein Element an der umfänglichen Außenseite des zweiten Verbindungsmittels, welche dadurch entsteht, dass die Begrenzungsfläche die Außenfläche des zweiten Verbindungsmittels nicht vollständig umschließt. Somit ist der Begrenzungsbereich an einem Rest der Außenfläche des zweiten Verbindungsmittels vorgesehen. Bei dem Positionierungsbereich handelt es sich bevorzugt um eine Ausprägung, welche an der Restfläche angeordnet ist und sich orthogonal zur axialen Erstreckungsrichtung erstreckt bzw. von der Begrenzungsfläche beabstandet ist. Insbesondere kann der Positionierungsbereich aus einer radial umlaufenden Ausprägung bestehen, welche an der Außenseite des zweiten Verbindungsmittels vorgesehen ist und von der Begrenzungsfläche in einer orthogonalen Richtung zur axialen Erstreckungsrichtung hervorragt, insbesondere zwischen 5 mm und 60 mm, besonders bevorzugt zwischen 10 mm und 30 mm. In anderen Worten kann der Positionierungsbereich als eine Art radialer Vorsprung des zweiten Verbindungsmittels ausgebildet sein. Bevorzugterweise ist bzw. weist der Positionierungsbereich eine Anschlagfläche auf und ist zweckmäßigerweise in seinem Querschnitt als ein rechteckiger Körper ausgeführt, wobei die Anschlagsfläche bevorzugt orthogonal zur axialen Erstreckungsrichtung ausgeführt ist. Die Anschlagsfläche grenzt bevorzugt direkt an die Begrenzungsfläche an, ist jedoch dabei rechtwinklig zur Begrenzungsfläche ausgeführt. Dadurch wird ein Anschlag für einen Achslenker gebildet. Dabei führt der Positionierungsbereich eine Lagesicherung des Achslenkers durch, indem ein Achslenker gegen die Anschlagsfläche des Positionierungsbereiches gedrückt wird und somit gegen ein Verrutschen oder Verschieben oder ähnliches in zumindest eine Richtung begrenzt wird. Der Positionierungsbereich ist vorteilhafterweise einstückig mit dem zweiten Verbindungsmittel ausgebildet, insbesondere durch ein Gießverfahren. Der Vorteil dieser Ausführungsform ist, dass der Positionierungsbereich mit Hilfe von einfachen Mitteln eine Form ausbildet, welche dazu geeignet ist, eine Lagesicherung des Achslenkers zu vollziehen und ein besonders hohes Maß an Sicherheit bietet. Durch die Variierung der Erstreckungslänge des Positionierungsbereichs entlang der axialen Erstreckungsrichtung kann gezielt ein Achslenker desachsiert werden, insbesondere in eine Verschiebungsrichtung, welche gegen die Anschlagsfläche verläuft.

Vorteilhafterweise sind der Positionierungsbereich und das zweite Verbindungsmittel einteilig ausgeführt. Unter "einteilig" ist zu verstehen, dass der Positionierungsbereich und das zweite Verbindungsmittel aus einem und demselben Bauteil gebildet werden. Dies kann insbesondere durch ein Fertigungsverfahren, wie beispielsweise Gießen, insbesondere Druckguss oder Schwerkraft-Kokillenguss, erreicht werden. Der Vorteil des Druckgussverfahrens ist, dass mit Hilfe einer geringen Taktzeit eine hohe Wirtschaftlichkeit der Herstellung des zweiten Verbindungsmittels und des Positionierungsbereichs erreicht werden kann. Der Vorteil des Schwerkraftkokillengussverfahrens ist, dass eine hohe Materialvielfalt, insbesondere von Metall- und/oder Aluminiumlegierungen, verwendet werden kann. In einer alternativen Ausführungsform kann das zweite Verbindungsmittel und der Positionierungsbereich auch aus einem Kunststoff oder Kunststoffverbund, insbesondere mit einer Glasfaser- oder Kohlefaserverstärkung, ausgeführt werden, welche den Vorteil hat, dass kostengünstig eine breite Materialvielfalt verwendet werden kann. In einem konkreten Ausführungsbeispiel wird das zweite Verbindungsmittel mit dem Positionierungsbereich als einteiliges Gussteil ausgeführt, wobei dies mittels eines Druckgussverfahrens hergestellt wurde. Anschließend kann bevorzugt der Positionierungsbereich und die Außenfläche und/oder Innenflächen des zweiten Verbindungsmittels mittels eines trennenden Fertigungsverfahrens wie beispielsweise Fräsen oder Drehen nachbearbeitet werden.

Alternativ sind der Positionierungsbereich und das zweite Verbindungsmittel mehrteilig ausgeführt, wobei diese lösbar oder unlösbar miteinander verbunden sind. Dabei bedeutet mehrteilig, dass der Positionierungsbereich und das zweite Verbindungsmittel aus zwei unterschiedlichen Bauteilen bestehen. Die beiden Bauteile können mittels demselben oder auch unterschiedlichen Fertigungsverfahren hergestellt worden sein. Ebenso können der Positionierungsbereich und das zweite Verbindungsmittel aus unterschiedlichen Materialien hergestellt sein. Der Vorteil der unterschiedlichen Materialien ist, dass die unterschiedlichen Materialien aufeinander abgestimmt werden können und somit zusätzliche Eigenschaften, wie beispielsweise ein Rostschutz oder ähnliches vorgesehen werden kann. Bevorzugt ist dabei der Positionierungsbereich und das zweite Verbindungsmittel lösbar miteinander verbunden. Eine lösbare Verbindung ist insbesondere eine Schraubverbindung oder eine andere form- und/oder kraftschlüssige Verbindung wie beispielsweise Bajonettverschluss, Bolzen, Stifte, Gewindestifte, Passfedern oder einer Presspassung, welche mittels Aufschrumpfen hergestellt wurde. Alternativ sind der Positionierungsbereich und das zweite Verbindungsmittel unlösbar miteinander verbunden, insbesondere kraft- und/oder stoffschlüssig mittels eines Fertigungsverfahrens wie beispielsweise Schweißen, Nieten oder Kleben. Der Vorteil der unlösbaren Verbindung ist, dass mittels eines einfachen, unempfindlichen Fertigungsverfahrens, wie beispielsweise Schweißen, ein hoher Fertigungseffizienzgrad erreicht werden kann.

In einer vorteilhaften Ausführungsform ist der Positionierungsbereich und das zweite Verbindungsmittel mit einer kraft, reib-, form- und/oder stoffschlüssigen Verbindung miteinander verbunden. Bei einer kraftschlüssigen Verbindung handelt es sich bevorzugt um eine Schraubverbindung, wobei an der Außenseite des zweiten Verbindungsmittels ein Gewinde vorgesehen ist, wobei der Positionierungsbereich an seiner Innenseite ebenfalls ein Gewinde aufweist und der Positionierungsbereich und das zweite Verbindungsbereich mittels dieser beiden Gewinde verschraubt sind. Bei einer reibschlüssigen Verbindung handelt es sich bevorzugt um eine Verbindung zwischen dem zweiten Verbindungsmittel und dem Positionierungsbereich, welche durch die Reibkoeffizienten der Oberflächen der beiden Komponenten definiert wird, wie beispielsweise eine beschichtete Oberfläche oder beispielsweise eine Rändeloberfläche. Alternativ kann die Verbindung zwischen dem zweiten Verbindungsmittel und dem Positionierungsbereich mittels einer formschlüssigen Verbindung ausgeführt werden, bspw. ein Bajonettverschluss. Der Vorteil eines Bajonettverschlusses ist, dass mittels eines einfachen Montageschritts die Verbindung hergestellt werden kann. In einer weiteren alternativen Ausführungsform ist die Verbindung zwischen dem zweiten Verbindungsmittel und dem Positionierungsbereich durch eine stoffschlüssige Verbindung ausgeführt, wobei es sich bei der stoffschlüssigen Verbindung bevorzugt um eine Schweißverbindung handelt. Beim Schweißen handelt es sich bevorzugt um ein Reibschweißverfahren, wobei der Positionierungsbereich und das zweite Verbindungsmittel miteinander verbunden werden. Die stoffschlüssige Verbindung hat insbesondere den Vorteil, dass eine langlebige und robuste Verbindung mit einfachen Mitteln hergestellt werden kann. In einer beispielhaften Ausführungsform sind der Positionierungsbereich und das zweite Verbindungsmittel mittels einer stoffschlüssigen Verbindung durch Schweißen, insbesondere Reibschweißen oder Ultraschallschweißen, miteinander verbunden.

In einer vorteilhaften Ausführungsform sind das erste und/oder zweite Verbindungsmittel und/oder die Dämpfungseinheit koaxial zueinander ausgeführt. Unter einer koaxialen Ausführungsform des ersten und/oder zweiten Verbindungsmittels und/oder der Dämpfungseinheit ist bevorzugt zu verstehen, dass die Rotationsachsen der drei Komponenten (erstes, zweites Verbindungsmittel und/oder Dämpfungseinheit) übereinander liegen. Bei einer zweidimensionalen Betrachtungsweise des ersten und/oder zweiten Verbindungswinkels und/oder der Dämpfungseinheit sind die drei Komponenten bevorzugt konzentrisch zueinander ausgelegt. Insbesondere ist dabei bevorzugt, dass die axialen Erstreckungsrichtungen der drei Komponenten alle auf derselben Achse liegen. Dies hat den Vorteil, dass keine Unruhen bei der Lagervorrichtung entstehen können, da der Lagerpunkt sich entlang der axialen Erstreckungsrichtung erstreckt.

In einer weiteren bevorzugten Ausführungsform erstrecken sich das erste und zweite Verbindungsmittel, die Dämpfungseinheit und der Positionierungsbereich als ringförmiger Körper entlang der axialen Erstreckungsrichtung. Unter einem ringförmigen Körper ist dabei ein Rohr oder rohrähnlicher Körper zu verstehen. Alternativ kann unter einem ringförmigen Körper auch ein Kastenprofil verstanden werden, welches sich entlang der axialen Erstreckungsrichtung erstreckt. Es ist ebenso denkbar, dass eine Kombination aus rohrförmigen und kastenförmigen Profilen die Lagervorrichtung bilden können, wobei beispielsweise das erste Verbindungsmittel als ein Kastenprofil ausgeführt ist, die Dämpfungseinheit als eine Art Adapter von einem Kastenprofil auf ein Rohrprofil ausgeführt ist und das zweite Verbindungsmittel als ein Rohrprofil ausgeführt ist. Der Vorteil dieser Ausführungsform ist, dass an einem Haltebolzen, welcher ein Kastenprofil aufweist, ebenfalls Achslenker festgelegt werden können. Als ringförmiger Körper wird generell jede Querschnittskontur verstanden, welche keine Unterbrechung in ihrem Profil aufweist.

In einer weiteren vorteilhaften Ausführungsform weist das erste Verbindungsmittel eine Ausnehmung zur Festlegung, insbesondere. zur Montage, an einem Haltebock auf, wobei die Ausnehmung sich entlang der axialen Erstreckungsrichtung erstreckt. Bevorzugt handelt es sich bei der Ausnehmung zur Festlegung, insbesondere. zu Montage, an einem Haltebock um eine Bohrung, welche im ersten Verbindungsmittel vorgesehen wird. Die Ausnehmung ist bevorzugt in Abhängigkeit eines Haltebolzen eines Haltebocks ausgeführt, wobei die Ausnehmung bevorzugt eine Übergangspassung zum Haltebolzen aufweist. Alternativ kann aber auch eine Spiel- oder Presspassung vorgesehen werden. Die Ausnehmung erstreckt sich bevorzugt entlang der axialen Erstreckungsrichtung des ersten Verbindungsmittels. Bevorzugt handelt es sich bei dem ersten Verbindungsmittel um einen Profilkörper, welcher sich entlang der axialen Erstreckungsrichtung erstreckt und dabei eine Ausnehmung entlang der axialen Erstreckungsrichtung aufweist, wobei die Ausnehmung das erste Verbindungsmittel derart verändert, dass ein Rohr oder ein Kastenprofil entsteht. Besonders bevorzugt ist das erste Verbindungsmittel als eine Art Rohrprofil ausgeführt, wobei die Innenseite des Rohrprofils durch die Ausnehmung gebildet wird. Dies hat den Vorteil, dass mittels einer einfachen Verbindung zwischen dem Haltebolzen des Haltebocks und der Ausnehmung des ersten Verbindungsmittels die Lagervorrichtung an dem Haltebock angelegt werden kann und somit ein sehr geringer Montageaufwand anfällt.

In einer weiteren, bevorzugten Ausführungsform weist das zweite Verbindungsmittel einen zweiten Positionierungsbereich auf, wobei der zweite Positionierungsbereich eine zweite Anschlagsfläche aufweist, welche dazu ausgelegt ist, den Achslenker in seiner Lage zu sichern, wobei die zweite Anschlagsfläche vorzugsweise im Wesentlichen parallel zur ersten Anschlagsfläche ist. Der zweite Positionierungsbereich ist bevorzugt an dem zweiten Verbindungsmittel angeordnet und wobei der zweite Positionierungsbereich bevorzugt auf der anderen Seite des zweiten Verbindungsmittels wie der erste Positionierungsbereich liegt, insbesondere dem ersten gegenüberliegt. Der zweite Positionierungsbereich ist bevorzugt mehrteilig zu dem zweiten Verbindungsmittel ausgeführt, wobei der zweite Positionierungsbereich lösbar an dem zweiten Verbindungsmittel angebracht ist. Insbesondere handelt es sich bei dem zweiten Positionierungsbereich um eine Art Mutter oder mutterähnliches Bauteil, welches an einem Gewinde, das an dem zweiten Verbindungsmittel vorgesehen ist, angelegt werden kann. In einer bevorzugten Ausführungsform weist der zweite Positionierungsbereich eine zweite Anschlagsfläche auf, welche dazu ausgelegt ist, den Achslenker in seiner Lage bzw. seiner Position zu sichern. Insbesondere ist die zweite Anschlagsfläche dazu konfiguriert, ein Verrutschen oder eine Bewegung des Achslenkers in zumindest eine Richtung zu begrenzen. Dabei ist die zweite Anschlagsfläche im Wesentlichen parallel zur ersten Anschlagsfläche angeordnet, wobei "im Wesentlichen parallel" bedeutet, dass die erste und zweite Anschlagsfläche vorzugsweise parallel zueinander ausgeführt sind oder alternativ in einem Winkel zwischen 0° und 5° zueinander ausgeführt sind. In einer beispielhaften Ausführungsform ist der erste Positionierungsbereich mit dem zweiten Verbindungsmittel einteilig ausgeführt, wobei das zweite Verbindungsmittel gegenüberliegend zu dem ersten Positionierungsbereich ein Gewinde aufweist, an welchem der zweite Positionierungsbereich anbringbar ist, insbesondere, wenn der zweite Positionierungsbereich als eine Art Mutter ausgeführt ist. Bei diesem Ausführungsbeispiel wird der Achslenker mittels der ersten und der zweiten Anschlagsfläche sowie durch das zweite Verbindungsmittel dreidimensional gesichert, so dass der Achslenker in seine Position gezwungen wird. Der Vorteil dieser Ausführungsform ist, dass eine dreidimensionale Sicherung erfolgt, welche einen geringen Montageaufwand aufweist, da lediglich der zweite Positionierungsbereich angeordnet werden muss.

Erfindungsgemäß weist die Begrenzungsfläche in ihrer axialen Erstreckungsrichtung eine erste Erstreckungslänge auf, wobei der Positionierungsbereich in seiner axialen Erstreckungsrichtung eine zweite Erstreckungslänge aufweist, wobei das Verhältnis der zweiten zur ersten Erstreckungslänge zwischen 0,01 und 0,4 liegt. Bevorzugterweise beschreibt das Verhältnis zwischen der ersten und zweiten Erstreckungslänge die Verteilung des Positionierungsbereiches zu der Begrenzungsfläche über die gesamte Erstreckungslänge des zweiten Verbindungsmittels entlang der axialen Erstreckungsrichtung. Bei der ersten Erstreckungslänge handelt es sich bevorzugt um die Erstreckungslänge, welche durch die Endpunkte der Begrenzungsflächen entlang der axialen Erstreckungsrichtung gebildet wird. Diese Endpunkte werden bevorzugt mittels eines Vektors und dessen Länge oder Betrag als die erste Erstreckungslänge definiert. Bei der zweiten Erstreckungslänge handelt es sich bevorzugt um die Erstreckungslänge, welche sich aus den Endpunkten entlang der axialen Erstreckungsrichtung des Positionierungsbereiches ergibt, wobei es sich dabei ebenfalls um einen Vektor zwischen den beiden Endpunkten des Positionierungsbereiches und dessen Betrag handelt. Erfindungsgemäß ist das Verhältnis zwischen der zweiten und ersten Erstreckungslänge 0,01 und 0,4, besonders bevorzugt jedoch 0,1 bis 0,25. Der Vorteil dieser Ausführungsform ist, dass mittels der Erstreckungslänge und deren Definition ein Achslenker entlang der axialen Erstreckungsrichtung derart positioniert werden kann, dass vorteilhaft Effekte, wie beispielsweise die Schaffung von zusätzlichem Bauraum oder ähnlichem erreicht werden können.

In einer bevorzugten Ausführungsform ist der Vektor zwischen dem ersten und zweiten axialen Mittelpunkt symmetrisch zu dem Verhältnis der ersten und zweiten Erstreckungslänge ausgeführt. Symmetrisch bedeutet dabei, dass der Vektor dieselbe Länge aufweist wie die Breite des Positionierungsbereiches und somit der zweiten Erstreckungslänge entspricht. In anderen Worten entspricht die Breite des Positionierungsbereiches der Länge des Vektors. Dies ist besonders vorteilhaft, da die Desachsierung des Achslenkers mittels der Variation der Breite des Positionierungsbereiches erreicht werden kann und somit eine Desachsierung vorgenommen werden kann, welche mit geringen Fertigungskosten verknüpft ist.

In einer alternativen Ausführungsform ist der Vektor zwischen dem ersten und zweiten axialen Mittelpunkt asymmetrisch zu dem Verhältnis der ersten und zweiten Erstreckungslänge ausgeführt. "Asymmetrisch" bedeutet dabei, dass der Vektor nicht die gleiche Länge wie die Breite des Positionierungsbereiches entlang der axialen Erstreckungsrichtung hat. In einer beispielhaften Ausführungsform desachsiert der Vektor den Achslenker um zumindest 20mm, wobei die Breite des Positionierungsbereichs zumindest 10mm beträgt. Somit bildet sich eine zweite Begrenzungsfläche am zweiten Verbindungsmittel. Vorteilhafterweise kann an der zweiten Begrenzungsfläche ein weiterer Achslenker angelegt werden. Ein weiterer Vorteil ist, dass durch die Reduzierung der Breite des Positionierungsbereichs eine Materialeinsparung am zweiten Verbindungsmittel stattfindet.

Bevorzugterweise weist das erste Verbindungsmittel in seiner axialen Erstreckungsrichtung eine dritte Erstreckungslänge auf, wobei das zweite Verbindungsmittel in seiner axialen Erstreckungsrichtung eine vierte Erstreckungslänge aufweist, wobei das Verhältnis zwischen der dritten und vierten Erstreckungslänge 0,7 bis 1,3 beträgt. In anderen Worten sind das erste und zweite Verbindungsmittel nicht gleich lang. Insbesondere ist das zweite Verbindungsmittel bevorzugt kürzer als das erste Verbindungsmittel. Dies hat den Vorteil, dass das zweite Verbindungsmittel permanent vom Haltebock beabstandet ist und somit keine Vibrationen und/oder Stöße vom Achslenker direkt an den Haltebock übertragen werden können. Alternativ kann das zweite Verbindungsmittel auch länger als das erste Verbindungsmittel sein, wobei das erste Verbindungsmittel nicht am Haltebock anliegt. Zudem ist das zweite Verbindungsmittel vom Haltebock beabstandet, sodass keine Vibrationen und/oder Stöße übertragen werden können. Der Vorteil dieser Ausführungsform ist, dass mittels dem kurzen ersten Verbindungsmittel, dem zweiten Verbindungsmittel und der Dämpfungseinheit die Lagervorrichtung eine Rotation des Achslenkers besser dämpfen kann.

Weiterhin erfindungsgemäß umfasst eine Achsaufhängung einen Achslenker und einen Haltebock, wobei der Achslenker am Haltebock mittels einer Lagervorrichtung wie hierin beschrieben festgelegt ist, wobei die Lagervorrichtung einen axialen Mittelpunkt des Haltebocks zu einem axialen Mittelpunkt des Achslenkers sichert. Bei einem Achslenker handelt es sich bevorzugt um einen Quer- oder einen Längslenker für ein Nutzfahrzeug. Der Haltebock umfasst zweckmäßigerweise einen Haltebolzen und ist bevorzugt an einem Aufbau eines Nutzfahrzeuges anordenbar. Dabei weist der Haltebock bevorzugt zwei sich gegenüberliegende Innenflächen auf, welche bevorzugt jeweils eine Begrenzungsebene ausbilden, wobei der Haltebolzen bevorzugt senkrecht sowie zwischen den Begrenzungsebenen festgelegt ist. Vorzugsweise ist an dem Haltebolzen eine Lagervorrichtung angeordnet, indem die Lagervorrichtung eine Ausnehmung aufweist, in die der Haltebolzen des Haltebocks eingeführt werden kann und somit die Lagervorrichtung mittels des Haltebolzens am Haltebock montiert werden kann. An der Lagervorrichtung ist ein Achslenker festgelegt, wobei der Achslenker bevorzugt eine Ausnehmung aufweist, welche an die Begrenzungsfläche der Lagervorrichtung anlegbar ist. Die Lagervorrichtung ist derart ausgelegt, dass sie den axialen Mittelpunkt des Haltebocks zu dem axialen Mittelpunkt des an ihr festgelegten Achslenkers voneinander beabstandet sichert. Die axiale Erstreckungsrichtung des Haltebolzens und/oder -bocks ist bevorzugt eine Achse, welche senkrecht zu den Begrenzungsebenen vorgesehen ist und weiter bevorzugt ist diese Achse gleich der Rotationsachse des Haltebolzens. Mittig zwischen den beiden Begrenzungsebenen und auf der Rotationsachse des Haltebolzens liegt der axiale Mittelpunkt des Haltebocks. Der axiale Mittelpunkt des Achslenkers wird dadurch bevorzugt definiert, dass der Achslenker eine Ausnehmung aufweist, welche zur Festlegung an der Lagervorrichtung dient und diese Ausnehmung durch ihre Rotationssymmetrie eine Achse bildet. Diese Achse wird durch die Endpunkte des Achslenkers und deren Projektionen auf die Achse begrenzt. Mittig zwischen den Endpunkten ist axiale Mittelpunkt des Achslenkers angeordnet. Dabei ist der axiale Mittelpunkt des Haltebocks zu dem axialen Mittelpunkt des Achslenkers beabstandet, insbesondere entlang der axialen Erstreckungsrichtung der Lagervorrichtung beabstandet. Des Weiteren ist die Lagervorrichtung dazu ausgelegt, den Achslenker so zu sichern, dass der axiale Mittelpunkt des Haltebocks und der axiale Mittelpunkt des Achslenkers in einem definierten Abstand zueinander verweilen, insbesondere bei Vibrationen oder bei einer Kraft- und/oder Momenteinwirkung auf den Achslenker. Der Vorteil dieser Ausführungsform ist, dass mittels der Lagervorrichtung ein Achslenker im Verhältnis zum Haltebock desachsiert werden kann, so dass eine Verschiebung des Achslenkers in eine Richtung erfolgen kann und trotzdem der gleiche Typ von Haltebock verwendet werden kann. Dies hat den besonderen Vorteil, dass bei einem Wechsel des Achslenkers, welcher nicht dieselbe Achslenkerbreite aufweist, nicht der Haltebock und seine dafür vorgesehenen Bohrungen und Anschlussvorrichtungen verändert werden muss, sondern lediglich eine andere Lagervorrichtung an dem Haltebock angebracht werden muss, um den neuen Achslenker zu montieren, was eine Reduzierung der Kosten und des Montageaufwandes des neuen Achslenkers mit sich bringt.

In einer bevorzugten Ausführungsform umfasst die Achsaufhängung eine Luftfeder, wobei die Luftfeder in der axialen Erstreckungsrichtung einen Mittelpunkt aufweist, wobei der axiale Mittelpunkt der Luftfeder beabstandet von dem axialen Mittelpunkt des Haltebocks ist. In anderen Worten weist die Luftfeder in Bezug auf die axiale Erstreckungsrichtung der Lagervorrichtung einen axialen Mittelpunkt auf, welcher durch den insbesondere kreisförmigen Querschnitt der Luftfeder und dessen Rotationssymmetrie definiert wird. In anderen Worten ist der axiale Mittelpunkt der Luftfeder der Kreismittelpunkt des bevorzugt runden Querschnittes der Luftfeder und dessen Projektion auf die axiale Erstreckungsrichtung der Lagervorrichtung. Dabei ist der axiale Mittelpunkt der Luftfeder von dem axialen Mittelpunkt des Haltebocks beabstandet. Durch diese Beabstandung lässt sich zusätzlicher Bauraum generieren, welcher vorteilhaft für die Unterbringung weiterer Komponenten genutzt werden kann und somit einen erheblichen Vorteil im Packaging erzeugt.

Bevorzugt ist, dass die Lagervorrichtung an dem Haltebock anliegt, wobei der Achslenker von dem Haltebock beabstandet ist. Bevorzugterweise weist der Haltebock eine Innenfläche auf, an der die Lagervorrichtung angebracht wird. Dies ist bevorzugt derart ausgeführt, dass die Lagervorrichtung an einem Haltebolzen des Haltebocks nicht entlangrutschen kann, so dass die Lagervorrichtung und die Innenseite des Haltebocks aneinander anliegen. Des Weiteren ist bevorzugt, dass der Achslenker derart positioniert wird, so dass dieser nicht an die Innenfläche des Haltebocks stößt. Dies wird damit erreicht, dass bevorzugt die Lagervorrichtung ein zweites Verbindungsmittel aufweist, welches bevorzugt eine geringere Erstreckungslänge aufweist als das erste Verbindungsmittel und somit das zweite Verbindungsmittel an seinen Seitenflächen von den Innenflächen des Haltebocks beabstandet ist. An dem zweiten Verbindungsmittel ist bevorzugt der Achslenker derart befestigt, dass er lagesicher angeordnet ist. Dies ist besonders vorteilhaft, da der Achslenker von der Innenfläche des Haltebocks beabstandet ist und somit keine direkte Übertragung von Stößen oder Vibrationen an dem Haltebock erfolgen kann.

Die Erfindung soll nun anhand von Ausführungsbeispielen mit Bezug auf die beiliegenden Zeichnungen näher erläutert werden. In den Figuren sind die gleichen oder einander entsprechenden Elemente mit den gleichen Bezugszeichen gekennzeichnet. Es zeigen:
- **Figur 1** zeigt eine schematische Schnittansicht einer Lagervorrichtung gemäß einer ersten Ausführungsform.
- **Figur 2** zeigt eine schematische Schnittansicht einer Lagervorrichtung mit einem Haltebock und einem Achslenker gemäß einer zweiten Ausführungsform.
- **Figur 3** zeigt eine schematische Ansicht eines Haltebocks mit einem Teil einer Lagervorrichtung gemäß einer dritten Ausführungsform.
- **Figur 4** zeigt eine schematische Schnittansicht eines Haltebocks mit einer Lagervorrichtung gemäß einer vierten Ausführungsform.
- **Figur 5** zeigt eine schematische Schnittansicht einer Lagervorrichtung gemäß einer fünften Ausführungsform.
- **Figur 6** zeigt eine schematische Draufsicht einer Achsaufhängung gemäß einer sechsten Ausführungsform.
- **Figur 7** zeigt eine schematische Schnittansicht einer Lagervorrichtung gemäß einer siebten Ausführungsform.

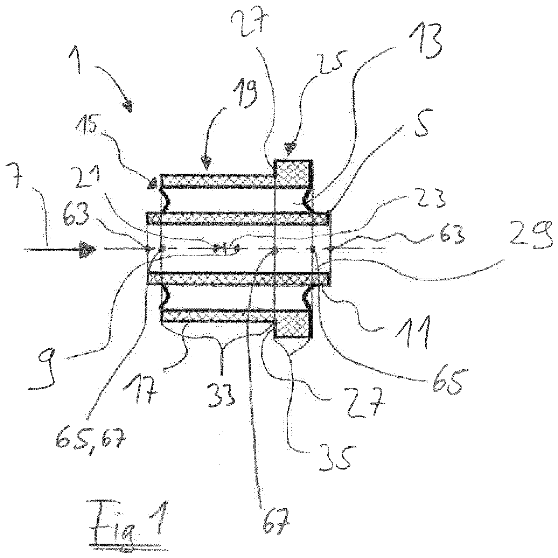

**Figur 1** zeigt eine schematische Schnittansicht der Lagervorrichtung 1. Die Lagervorrichtung 1 umfasst ein erstes Verbindungsmittel 5, eine Dämpfungseinheit 13 sowie ein zweites Verbindungsmittel 17. Dabei weist das erste Verbindungsmittel 5 eine axiale Erstreckungsrichtung 7 auf. Das erste Verbindungsmittel 5 hat einen ersten axialen Mittelpunkt 9, welcher sich auf der axialen Erstreckungsrichtung 7 befindet. Der erste axiale Mittelpunkt 9 wird durch das erste Verbindungsmittel 5 definiert, indem mittig zwischen den Endpunkten 63 des ersten Verbindungsmittels auf axialen Erstreckungsrichtung 7 der erste axiale Mittelpunkt 9 vorgesehen wird. Das erste Verbindungsmittel 5 weist eine Umlauffläche 11 auf, welche durch die Außenseite des ersten Verbindungsmittels 5 gebildet wird. Die Umlauffläche 11 wird von einer Dämpfungseinheit 13 teilweise umschlossen. Die Dämpfungseinheit 13 weist eine Haltefläche 15 auf, an der das zweite Verbindungsmittel 17 festgelegt ist. Dabei kann das zweite Verbindungsmittel 17 die Haltefläche 15 vollständig oder teilweise umschließen. Die Erstreckungslänge des zweiten Verbindungsmittels 17 ist durch die beiden Endpunkte 65 auf der axialen Erstreckungsrichtung 7 definiert. Das zweite Verbindungsmittel 17 weist eine Begrenzungsfläche 19 auf, welche dazu ausgelegt ist, einen Achslenker 3 festzulegen. Das zweite Verbindungsmittel 17 weist ebenso einen Positionierungsbereich 25 auf, welcher über eine Anschlagsfläche 27 verfügt. Wie in der Figur 1 zu sehen ist, ist die Anschlagsfläche 27 orthogonal zu der Begrenzungsfläche 19 ausgeführt. Die Anschlagsfläche 27 dient dazu, einen Achslenker 3, welcher in der Figur 1 nicht dargestellt ist, in seiner Lage zu sichern. Insbesondere dient die Anschlagsfläche 27 dazu, einen Achslenker 23 gegen ein Verrutschen in eine Richtung zu begrenzen. Zudem weist das erste Verbindungsmittel 5 eine Ausnehmung 29 auf. Die Ausnehmung 29 ist dazu ausgelegt, dass ein Haltebolzen eines Haltebocks 31 daran festgelegt werden kann. Zudem weist das zweite Verbindungsmittel 17 eine erste Erstreckungslänge 33 auf, welche durch die Projektionsfläche der Begrenzungsfläche 19 entlang der axialen Erstreckungsrichtung 7 definiert wird. Zudem weist die Begrenzungsfläche 19 einen zweiten axialen Mittelpunkt 21 auf. Der zweite axiale Mittelpunkt wird durch die Endpunkte 67 der Begrenzungsfläche 19 definiert, wobei der zweite axiale Mittelpunkt mittig zwischen den Endpunkten 67 der Begrenzungsfläche 19 auf der axialen Erstreckungsrichtung 7 angeordnet ist. Der erste axiale Mittelpunkt 9 und der zweite axiale Mittelpunkt 21 sind mittels eines Vektors 23 zueinander versetzt. Durch den Vektor 23 lässt sich der Abstand zwischen dem ersten 9 und zweiten 21 axialen Mittelpunkt beschreiben, so dass eine Desachsierung eines Achslenkers mittels der Lagervorrichtung 1 stattfindet. Zudem weist der Positionierungsbereich 25 eine zweite Erstreckungslänge 35 auf, welche durch dessen Endpunkte entlang der axialen Erstreckungsrichtung 7 definiert wird. Bevorzugt ist die zweite Erstreckungslänge genau gleich lang wie der Vektor 23. In einer alternativen Ausführungsform kann die zweite Erstreckungslänge 35 auch eine unterschiedliche Länge wie der Vektor 23 haben.

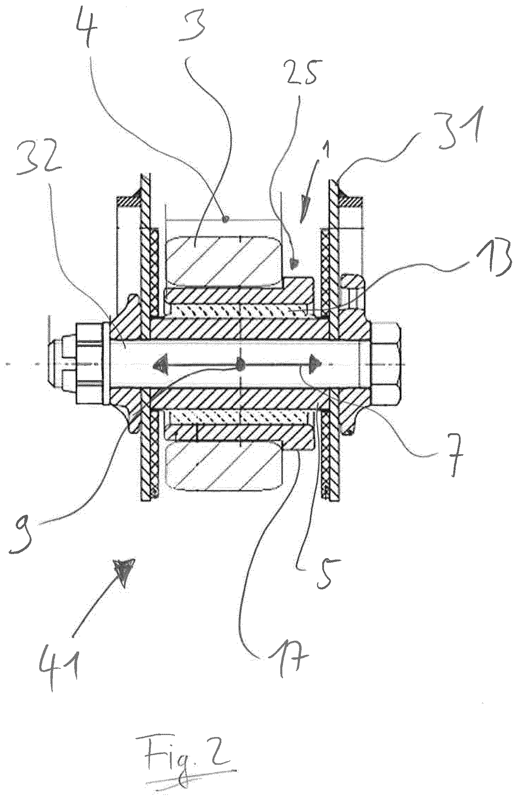

**Figur 2** zeigt eine schematische Schnittansicht eines Haltebocks 31 mit einem Haltebolzen 32, sowie eine Lagervorrichtung 1 und einen Achslenker 3. Dabei ist die Lagervorrichtung 1 mittels dem Haltebolzen 32 an dem Haltebock 31 befestigt. An der Lagervorrichtung 1 ist bevorzugt ein Achslenker 3 vorgesehen. Der Achslenker 3 wird an dem zweiten Verbindungsmittel 17 festgelegt und mittels des Positionierungsbereichs 25 desachsiert. Desachsierung bedeutet bevorzugt, dass der Mittelpunkt des Achslenkers beabstandet ist von einem Mittelpunkt des ersten Verbindungsmittels oder des Haltebocks 31. Zudem weist das erste und zweite Verbindungsmittel sowie die Dämpfungseinheit 13 eine axiale Erstreckungsrichtung 7 auf, welche koaxial mit dem Haltebolzen 32 ausgeführt ist. Insbesondere handelt es sich bei der Darstellung der Figur 2 um einen Ausschnitt einer Achsaufhängung 41.

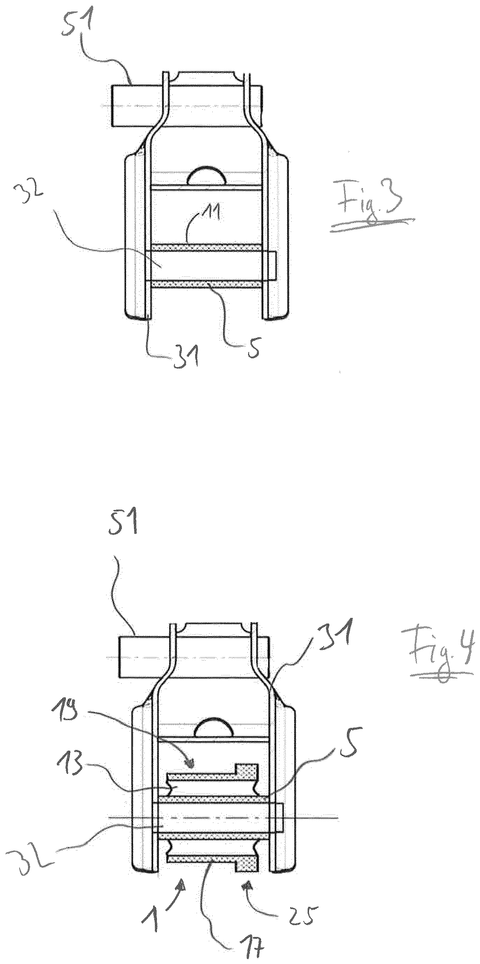

**Figur 3** zeigt eine schematische Schnittansicht eines Haltebocks 31, umfassend einen Montagebolzen 51, welcher dazu dient, einen nicht gezeigten Dämpfer festzulegen, sowie einen Haltebolzen 32, an dem ein erstes Verbindungsmittel 5 festgelegt ist. Das erste Verbindungsmittel 5 weist eine außenumläufige Umlauffläche 11 auf, an der eine Dämpfungseinheit 13 angelegt werden kann.

**Figur 4** zeigt eine schematische Schnittansicht eines Haltebocks 31 mit einer Lagervorrichtung 1. Der Haltebock 31 umfasst einen Haltebolzen 32, an welchem ein erstes Verbindungsmittel 5 angelegt ist. Das erste Verbindungsmittel 5 wird von einer Dämpfungseinheit 13 umschlossen, an welcher ein zweites Verbindungsmittel 17 angelegt wird. Das zweite Verbindungsmittel 17 weist eine außenumfängliche Begrenzungsfläche 19 sowie einen Positionierungsbereich 25 auf. Der Positionierungsbereich 25 ist dazu ausgelegt, einen Achslenker in einer Lage zu sichern, wobei der axiale Mittelpunkt des Haltebocks 31 beabstandet von einem axialen Mittelpunkt des Achslenkers bzw. der zweite axiale Mittelpunkt ist.

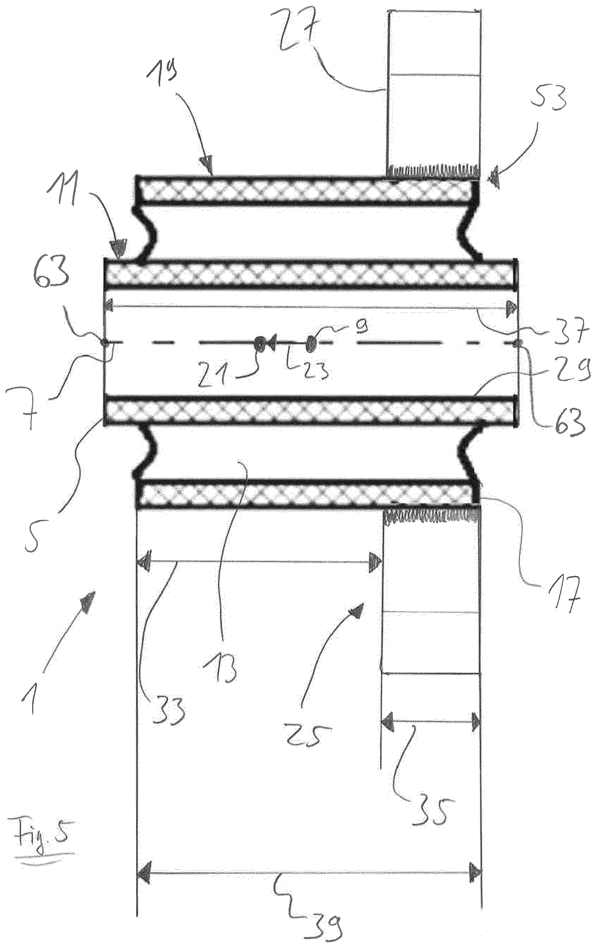

**Figur 5** zeigt eine Lagervorrichtung gemäß einer bevorzugten Ausführungsform, wobei der Positionierungsbereich 25 und das zweite Verbindungsmittel 17 mehrteilig lösbar miteinander ausgeführt sind. Dabei weist das zweite Verbindungsmittel 17 eine Verbindung 53 auf, welche das zweite Verbindungsmittel 17 mit dem Positionierungsbereich 25, welcher als eine Art von Mutter ausgeführt ist, verbindet. Dabei ist die Verbindung 53 bevorzugt als eine Art Schraubverbindung ausgeführt, wobei der Positionierungsbereich 25 an seiner Innenseite eine Art Gewinde aufweist, welches in ein dafür vorgesehenes Gegenstück, welches an dem zweiten Verbindungsmittel 17 vorgesehen ist, eingreifen kann. Zudem weist das zweite Verbindungsmittel 17 eine Begrenzungsfläche 19 auf, welche einen zweiten axialen Mittelpunkt 21 bildet. Der zweite axiale Mittelpunkt 21 ist beabstandet entlang eines Vektors 23 von dem ersten axialen Mittelpunkt 9. Der erste axiale Mittelpunkt 9 wird durch das erste Verbindungsmittel 5 definiert. Das erste Verbindungsmittel 5 weist eine dritte Erstreckungslänge 27 auf, welche sich durch die Endpunkte des Verbindungsmittels entlang der axialen Erstreckungsrichtung 7 definiert. Der erste axiale Mittelpunkt befindet sich in der Mitte der dritten Erstreckungslänge 37, welche durch die Endpunkte 65 des zweiten Verbindungsmittels 17 begrenzt ist. Bevorzugt weist das zweite Verbindungsmittel 17 eine vierte Erstreckungslänge 39 auf, wobei bevorzugt die vierte Erstreckungslänge 39 kleiner ist als die dritte Erstreckungslänge 37. Dies hat den Vorteil, dass das zweite Verbindungsmittel 17 von dem Haltebock 31 beabstandet ist. Zudem weist die Begrenzungsfläche 19 eine erste Erstreckungslänge 33 auf, welche durch die Breite entlang der axialen Erstreckungsrichtung 7 der Begrenzungsflächen 19 begrenzt ist. Der Positionierungsbereich 25 weist eine zweite Erstreckungslänge 35 auf, welche durch die Breite des Positionierungsbereichs 25 entlang der axialen Erstreckungsrichtung 7 definiert ist. Bevorzugt ist die zweite Erstreckungslänge 35 gleich lang wie der Vektor 23. In einer bevorzugten Ausführungsform wird das zweite Verbindungsmittel 17 gegossen und anschließend ein Gewinde mittels eines Gewindeschneiders eingeschnitten, so dass auf das Gewinde des Verbindungsmittels 17 ein Positionierungsbereich 25 angebracht werden kann, welcher durch eine Mutter oder ein mutterähnliches Bauteil gebildet wird. Dabei weist der Positionierungsbereich, welcher als Mutter oder mutterähnliches Bauteil ausgeführt ist, eine Anschlagsfläche 27 auf, welche bevorzugt orthogonal zu der Begrenzungsfläche 19 ausgeführt ist. Die Anschlagsfläche 27 führt eine Lagesicherung des Achslenkers 3 entlang zumindest einer Richtung der axialen Erstreckungsrichtung 7 durch.

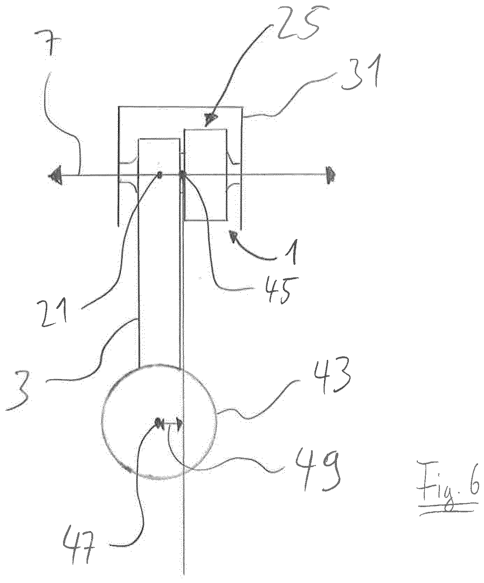

**Figur 6** zeigt eine schematische Draufsicht einer Achsaufhängung. Der Haltebock 31 bildet einen axialen Mittelpunkt 45 aus. Zudem legt der Haltebock 31 eine Lagervorrichtung 1 fest. Die Lagervorrichtung 1 weist einen Positionierungsbereich 25 auf, welcher einen Achslenker 3 desachsiert. Der Achslenker 3 weist einen axialen Mittelpunkt auf, welcher dem zweiten axialen Mittelpunkt 21 der Begrenzungsfläche 19 entspricht. Der zweite axiale Mittelpunkt 21 ist von dem ersten axialen Mittelpunkt bzw. des axialen Mittelpunkts des Haltebocks 45 beabstandet. An dem Achslenker 3 ist ebenso eine Luftfeder 43 vorgesehen. Die Luftfeder weist ebenfalls einen axialen Mittelpunkt 47 auf, welcher von dem axialen Mittelpunkt des Haltebocks 45 beabstandet ist. Der Abstand 49 wird in Figur 6 schematisch dargestellt zwischen dem axialen Mittelpunkt des Haltebocks 45 und dem axialen Mittelpunkt der Luftfeder 47.

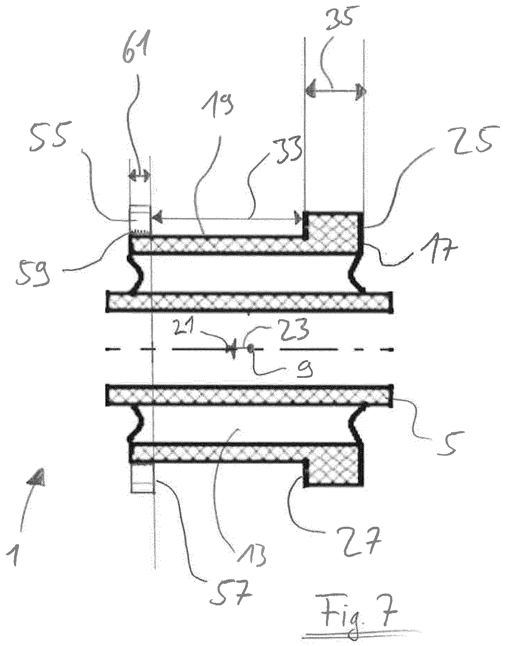

**Figur 7** zeigt eine bevorzugte Ausführungsform der Lagervorrichtung 1, wobei die Lagervorrichtung 1 ein erstes Verbindungsmittel 5, eine Dämpfungseinheit 13 sowie ein zweites Verbindungsmittel 17 aufweist. Dabei umfasst das zweite Verbindungsmittel einen ersten Positionierungsbereich 25 und einen zweiten Positionierungsbereich 55. Der erste Positionierungsbereich 25 weist eine erste Anschlagsfläche 27 auf, welche orthogonal zur Begrenzungsfläche 19 ausgeführt ist. Der erste Positionierungsbereich 25 und das zweite Verbindungsmittel 17 sind einteilig ausgeführt. Der zweite Positionierungsbereich 55 und das zweite Verbindungsmittel 17 sind mehrteilig ausgeführt, welche mittels der Verbindung 59 miteinander verbunden sind. Bei der Verbindung 59 handelt es sich bevorzugt um eine Schraubverbindung, wobei der zweite Positionierungsbereich 55 und das zweite Verbindungsmittel 17 jeweils ein Gewinde aufweisen, die ineinander eingreifen können. Der zweite Positionierungsbereich 25 bildet eine zweite Anschlagsfläche 57, an welche ein Achslenker 3 positionierbar und sicherbar ist. Bevorzugt sichert die zweite Anschlagsfläche 57 den Achslenker in zumindest eine Richtung, bevorzugt schlägt gegen diese an. Zudem weist der zweite Positionierungsbereich 55 eine Erstreckungslänge 61 entlang der axialen Erstreckungsrichtung 7 auf. Die Erstreckungslänge 61 beeinflusst die Erstreckungslänge 33 der Begrenzungsfläche 19 und somit den zweiten axialen Mittelpunkt 21. Zudem lässt sich mit dem ersten und zweiten Positionierungsbereich und dem zweiten Verbindungsmittel 17 ein Achslenker 3 dreidimensional sichern, da alle Freiheitsgerade durch diese drei Elemente gesichert werden.

### Bezugszeichenliste

- 1 -: Lagervorrichtung
- 3 -: Achslenkers
- 4 -: Mittelpunkt Achslenker
- 5 -: erstes Verbindungsmittel
- 7 -: axiale Erstreckungsrichtung
- 9 -: erster axialer Mittelpunkt
- 11 -: Umlauffläche
- 13 -: Dämpfungseinheit
- 15 -: Haltefläche
- 17 -: zweites Verbindungsmittel
- 19 -: Begrenzungsfläche
- 21 -: zweiten axialen Mittelpunkt
- 23 -: Vektor
- 25 -: Positionierungsbereich
- 27 -: Anschlagsfläche
- 29 -: Ausnehmung
- 31 -: Haltebock
- 32 -: Haltebolzen
- 33 -: erste Erstreckungslänge
- 35 -: zweite Erstreckungslänge
- 37 -: dritte Erstreckungslänge
- 39 -: vierte Erstreckungslänge
- 41 -: Achsaufhängung
- 43 -: Luftfeder
- 45 -: Axialer Mittelpunkt Haltebock
- 47 -: Axialer Mittelpunkt Luftfeder
- 49 -: Abstand zwischen axialem Mittepunkt Haltebock und Luftfeder
- 51 -: Montagebolzen
- 53 -: Verbindung
- 55 -: zweiter Positionierungsbereich
- 57 -: zweite Anschlagsfläche
- 59 -: Verbindung zweiter Positionierungsbereich
- 61 -: Erstreckungslänge zweiter Positionierungsbereich
- 63 -: Endpunkte erstes Verbindungsmittel
- 65 -: Endpunkte zweites Verbindungsmittel
- 67 -: Endpunkte Begrenzungsfläche

## Patentansprüche

1. Lagervorrichtung zur Lagerung eines Achslenkers (3), insbesondere für Nutzfahrzeuge, umfassend;
- ein erstes Verbindungsmittel (5), welches eine axiale Erstreckungsrichtung (7) aufweist,
wobei das erste Verbindungsmittel (5) in der axialen Erstreckungsrichtung (7) einen ersten axialen Mittelpunkt (9) aufweist,
wobei das erste Verbindungsmittel (5) eine nach außen umfängliche Umlauffläche (11) bildet,
- wobei an der Umlauffläche (11) eine Dämpfungseinheit (13) festgelegt ist,
wobei die Dämpfungseinheit die Umlauffläche zumindest teilweise umfänglich umschließt,
wobei die Dämpfungseinheit (13) eine nach außen umfängliche Haltefläche (15) aufweist,
- wobei ein zweites Verbindungsmittel (17) an der Haltefläche (15) festgelegt ist,
wobei das zweite Verbindungsmittel sich entlang der axialen Erstreckungsrichtung (7) erstreckt,
wobei das zweite Verbindungsmittel eine Begrenzungsfläche (19) aufweist, an welcher ein Achslenker (3) festlegbar, insbesondere abstützend anlegbar, ist,
wobei die Begrenzungsfläche (19) in der axialen Erstreckungsrichtung (7) einen zweiten axialen Mittelpunkt (21) aufweist,
wobei der erste und der zweite axiale Mittelpunkt entlang eines Vektors (23) der axialen Erstreckungsrichtung (7) versetzt zueinander sind,
wobei das zweite Verbindungsmittel (17) einen Positionierungsbereich (25) aufweist, der eine Anschlagsfläche (27) ausbildet, welche dazu ausgelegt ist, eine Lagesicherung des Achslenkers (3) zu bewirken,
wobei die Begrenzungsfläche (19) in ihrer axialen Erstreckungsrichtung (7) eine erste Erstreckungslänge (33) aufweist,
wobei der Positionierungsbereich (25) in seiner axialen Erstreckungsrichtung (7) eine zweite Erstreckungslänge (35) aufweist,
**dadurch gekennzeichnet, dass**
das Verhältnis der zweiten zur ersten Erstreckungslänge zwischen 0,01 und 0,4 liegt.

2. Lagervorrichtung nach Anspruch 1, wobei der Positionierungsbereich (25) und das zweite Verbindungsmittel (17) einteilig ausgeführt sind.

3. Lagervorrichtung nach Anspruch 1, wobei Positionierungsbereich (25) und das zweite Verbindungsmittel (17) mehrteilig ausgeführt sind, wobei diese lösbar oder unlösbar miteinander verbunden sind.

4. Lagervorrichtung nach Anspruch 3, wobei der Positionierungsbereich (25) und das zweite Verbindungsmittel (17) mittels einer kraft-, reib-, form-, und/oder stoffschlüssigen Verbindung miteinander verbunden sind.

5. Lagervorrichtung nach einem der vorherigen Ansprüche, wobei das erste und/oder zweite Verbindungsmittel (17) und/oder die Dämpfungseinheit (13) koaxial zueinander ausgeführt sind.

6. Lagervorrichtung nach einem der vorherigen Ansprüche, wobei das erste und/oder das zweite Verbindungsmittel (5, 17) und/oder die Dämpfungseinheit (13) koaxial zueinander ausgeführt sind.

7. Lagervorrichtung nach einem der vorherigen Ansprüche, wobei das erste Verbindungsmittel (5) eine Ausnehmung (29) zur Festlegung an einen Haltebock (31) aufweist, wobei sich die Ausnehmung (29) entlang der axialen Erstreckungsrichtung (7) erstreckt.

8. Lagervorrichtung nach einem der vorherigen Ansprüche, wobei das zweite Verbindungsmittel (17) einen zweiten Positionierungsbereich (55) aufweist, wobei der zweite Positionierungsbereich (55) eine zweite Anschlagsfläche (57) aufweist, welche dazu ausgelegt ist, einen Achslenker in seiner Lage zu sichern.

9. Lagervorrichtung nach Anspruch 8, wobei die zweite Anschlagsfläche (57) im Wesentlichen parallel zur Anschlagsfläche (27) ist.

10. Lagervorrichtung nach einem der vorherigen Ansprüche, wobei der Vektor (23) zwischen dem ersten und zweiten axialen Mittelpunkt (9, 21) symmetrisch zu dem Verhältnis der ersten und zweiten Erstreckungslänge (33, 35) ausgeführt ist.

11. Achsaufhängung umfassend einen Achslenker (3) und einen Haltebock, wobei der Achslenker (3) am Haltebock (31) mittels einer Lagervorrichtung nach einem der Ansprüche 1-7 festgelegt ist, wobei die Lagervorrichtung einen axialen Mittelpunkt des Haltebock (31) zu einem axialen Mittelpunkt des Achslenker (3) sichert.

12. Achsaufhängung nach Anspruch 11, wobei die Achsaufhängung eine Luftfeder umfasst, wobei die Luftfeder in der axialen Erstreckungsrichtung (7) einen Mittelpunkt aufweist, wobei der axiale Mittelpunkt der Luftfeder beabstandet von dem axialen Mittelpunkt des Haltebocks ist.

13. Achsaufhängung nach Anspruch 11 oder 12, wobei die Lagervorrichtung an dem Haltebock anliegt, wobei der Achslenker (3) von dem Haltebock beabstandet ist.

## Claims

1. A bearing device for mounting an axle guide (3), in particular for commercial vehicles, comprising;
- a first connecting means (5), which has an axial direction of extension (7),
wherein the first connecting means (5) has a first axial centre (9) in the axial direction of extension (7),
wherein the first connecting means (5) forms an outwardly peripheral circumferential surface (11),
- a damping unit (13) being fixed to the circumferential surface (11),
wherein the damping unit peripherally surrounds the circumferential surface at least partially,
wherein the damping unit (13) has an outwardly peripheral retaining surface (15),
- a second connecting means (17) being fixed to the retaining surface (15),
wherein the second connecting means extends along the axial direction of extension (7),
wherein the second connecting means has a boundary surface (19) on which an axle guide (3) can be fixed, in particular can be placed in a supporting manner,
wherein the boundary surface (19) has a second axial centre (21) in the axial direction of extension (7),
wherein the first and second axial centres are offset from each other along a vector (23) of the axial direction of extension (7),
wherein the second connecting means (17) comprises a positioning portion (25), which forms a stop surface (27) adapted to effect positional locking of the axle guide (3),
wherein the boundary surface (19) has a first extension length (33) in its axial direction of extension (7),
wherein the positioning portion (25) has a second extension length (35) in its axial direction of extension (7),
**characterized in that**
the ratio of the second to the first extension length is between 0.01 and 0.4.

2. The bearing device according to claim 1, wherein the positioning portion (25) and the second connecting means (17) are designed in one piece.

3. The bearing device according to claim 1, wherein the positioning portion (25) and the second connecting means (17) are designed multipiece, wherein these are connected to each other in a detachable or non-detachable manner.

4. The bearing device according to claim 3, wherein the positioning portion (25) and the second connecting means (17) are connected to each other by means of a force-, friction-, form- and/or material-locking connection.

5. The bearing device according to any one of the previous claims, wherein the first and/or second connecting means (17) and/or the damping unit (13) are designed coaxially to each other.

6. The bearing device according to any one of the previous claims, wherein the first and/or the second connecting means (5, 17) and/or the damping unit (13) are designed coaxially to each other.

7. The bearing device according to any one of the previous claims, wherein the first connecting means (5) has a recess (29) for attachment to a retaining bracket (31), the recess (29) extending along the axial direction of extension (7).

8. The bearing device according to any one of the previous claims, wherein the second connecting means (17) has a second positioning portion (55), wherein the second positioning portion (55) has a second stop surface (57) adapted to secure an axle guide in position.

9. The bearing device according to claim 9, wherein the second stop surface (57) is substantially parallel to the stop surface (27).

10. The bearing device according to any one of the previous claims,
wherein the vector (23) between the first and second axial centres (9, 21) is symmetrical to the ratio of the first and second extension lengths (33, 35).

11. An axle suspension comprising an axle guide (3) and a retaining bracket, the axle guide (3) being fixed to the retaining bracket (31) by means of a bearing device according to one of the claims 1-7, the bearing device securing an axial centre of the retaining bracket (31) to an axial centre of the axle guide (3).

12. The axle suspension according to claim 11, said axle suspension comprising an air spring, said air spring having a centre in the axial direction of extension (7), said axial centre of the air spring being spaced from the axial centre of the retaining bracket.

13. The axle suspension according to claim 11 or 12,
wherein the bearing device rests on the retaining bracket, wherein the axle guide (3) is spaced from the retaining bracket.

## Revendications

1. Dispositif de palier pour monter un guide d'essieu (3), en particulier pour véhicules utilitaires, comprenant :
- un premier moyen de liaison (5) présentant une direction d'extension axiale (7),
le premier moyen de liaison (5) présentant un premier centre axial (9) dans la direction d'extension axiale (7),
le premier moyen de liaison (5) formant une surface de révolution (11) périphérique vers l'extérieur,
- une unité d'amortissement (13) immobilisée à la surface de révolution (11),
l'unité d'amortissement entourant au moins partiellement la surface de révolution à la périphérie,
l'unité d'amortissement (13) présentant une surface de retenue (15) périphérique vers l'extérieur,
- un second moyen de liaison (17) immobilisé à la surface de retenue (15), le second moyen de liaison s'étendant le long de la direction d'extension axiale (7),
le second moyen de liaison présentant une surface de délimitation (19) sur laquelle un guide d'essieu (3) peut être immobilisé, en particulier placé en étant soutenu,
la surface de délimitation (19) présentant un second centre axial (21) dans la direction d'extension axiale (7),
les premier et second centres axiaux étant décalés l'un par rapport à l'autre le long d'un vecteur (23) de la direction d'extension axiale (7),
le second moyen de liaison (17) comprenant une zone de positionnement (25) qui forme une surface de butée (27) qui est conçue pour effectuer un blocage en position du guide d'essieu (3),
la surface de délimitation (19) présentant une première longueur d'extension (33) dans sa direction d'extension axiale (7),
la zone de positionnement (25) présentant une seconde longueur d'extension (35) dans sa direction d'extension axiale (7),
**caractérisé en ce que**
le rapport de la seconde longueur d'extension sur la première est compris entre 0,01 et 0,4.

2. Dispositif de palier selon la revendication 1,
dans lequel la zone de positionnement (25) et le second moyen de liaison (17) sont réalisés d'un seul tenant.

3. Dispositif de palier selon la revendication 1,
dans lequel la zone de positionnement (25) et le second moyen de liaison (17) sont réalisés en plusieurs parties, celles-ci étant reliées les unes aux autres de manière détachable ou non détachable.

4. Dispositif de palier selon la revendication 3,
dans lequel la zone de positionnement (25) et le second moyen de liaison (17) sont reliés l'un à l'autre par une liaison par coopération de force, de friction, de forme et/ou de matière.

5. Dispositif de palier selon l'une des revendications précédentes,
dans lequel le premier et/ou le second moyen de liaison (17) et/ou l'unité d'amortissement (13) sont réalisés de façon coaxiale l'un par rapport à l'autre.

6. Dispositif de palier selon l'une des revendications précédentes,
dans lequel le premier et/ou le second moyen de liaison (5, 17) et/ou l'unité d'amortissement (13) sont réalisés de façon coaxiale l'un par rapport à l'autre.

7. Dispositif de palier selon l'une des revendications précédentes,
dans lequel le premier moyen de liaison (5) présente un évidement (29) pour l'immobilisation à un bloc de retenue (31), l'évidement (29) s'étendant le long de la direction d'extension axiale (7).

8. Dispositif de palier selon l'une des revendications précédentes,
dans lequel le second moyen de liaison (17) comprend une seconde zone de positionnement (55), la seconde zone de positionnement (55) comprenant une seconde surface de butée (57) adaptée pour bloquer un guide d'essieu dans sa position.

9. Dispositif de palier selon la revendication 8,
dans lequel la seconde surface de butée (57) est sensiblement parallèle à la surface de butée (27).

10. Dispositif de palier selon l'une des revendications précédentes,
dans lequel le vecteur (23) entre les premier et second centres axiaux (9, 21) est conçu de façon symétrique au rapport des première et seconde longueurs d'extension (33, 35).

11. Suspension d'essieu comprenant un guide d'essieu (3) et un bloc de retenue, le guide d'essieu (3) étant immobilisé au bloc de retenue (31) au moyen d'un dispositif de palier selon l'une des revendications 1 à 7,
dans laquelle le dispositif de palier bloque un centre axial du bloc de retenue (31) par rapport à un centre axial du guide d'essieu (3).

12. Suspension d'essieu selon la revendication 11,
dans laquelle la suspension d'essieu comprend un ressort pneumatique, le ressort pneumatique présentant un centre dans la direction d'extension axiale (7), le centre axial du ressort pneumatique étant espacé du centre axial du bloc de retenue.

13. Suspension d'essieu selon la revendication 11 ou 12,
dans laquelle le dispositif de palier est placé contre le bloc de retenue, le guide d'essieu (3) étant espacé du bloc de retenue.
